Europäisches Patentamt

European Patent Office

Office européen des brevets

(19)

(11) **EP 1 514 340 B1**

(12) **EUROPEAN PATENT SPECIFICATION**

(45) Date of publication and mention
of the grant of the patent:
**09.08.2006 Bulletin 2006/32**

(51) Int Cl.:
*H02K 21/16* (2006.01)

(21) Application number: **03755951.5**

(22) Date of filing: **26.05.2003**

(86) International application number:
**PCT/EP2003/005599**

(87) International publication number:
**WO 2003/103114 (11.12.2003 Gazette 2003/50)**

(54) **SYNCHRONOUS ELECTRICAL CONCENTRATED COIL MACHINE**

ELEKTRISCHER SYNCHRONMOTOR MIT KONZENTRIERTER WICKLUNG

MACHINE ÉLECTRIQUE SYNCHRONE COMPRENANT DES ENROULEMENTS CONCENTRÉS

(84) Designated Contracting States:
**AT BE BG CH CY CZ DE DK EE ES FI FR GB GR
HU IE IT LI LU MC NL PT RO SE SI SK TR**

(30) Priority: **31.05.2002 IT MI20021186**

(43) Date of publication of application:
**16.03.2005 Bulletin 2005/11**

(73) Proprietor: **Politecnico Di Milano
20133 Milano (IT)**

(72) Inventors:
• **DI GERLANDO, Antonino, Claudio
I-20133 Milano (IT)**
• **UBALDINI, Mario
I-20133 Milano (IT)**

(74) Representative: **Mittler, Enrico
Mittler & C. s.r.l.,
Viale Lombardia, 20
20131 Milano (IT)**

(56) References cited:
EP-A- 0 313 764          WO-A-00/76054
US-A- 4 774 428          US-A- 6 133 663
US-B1- 6 242 822

• **DATABASE WPI Week 200048 Derwent
Publications Ltd., London, GB; AN 2000-530881
XP002255840 & RU 2 143 777 C (DSTVENNO T
FIRMA EHLMA KO), 27 December 1999
(1999-12-27)**

**Description**

DESCRIPTION

The present invention herein refers to a synchronous electrical concentrated coil machine or otherwise called with tooth coils and to a method for determining the assignment of the phase and the winding direction of the coils of a synchronous electrical concentrated coil machine.

The functioning of the category of electrical tooth coil machines is based on physical laws and principles in common with those on which the functioning of every synchronous type of electrical machine is based: the law of electromagnetic induction and the principle of alignment of the magnetic fields within the air-gap.

In the traditional types of electrical machines, fitted with armature windings distributed in slots, the maximum effort is made to make the presence of the teeth negligible, considered a discretized magnetic disturbance, to attenuate with suitable clamping devices, that is with "spatial filtering". Among said devices there is the adoption of a high number of slots and the relative inclination between the field poles and the armature teeth opposite. In addition, it is believed to be necessary to choose a high number of slots/(pole-phase) so as to achieve quality electromagnetic performances (sinusoidal induced electromotive force waveform; constant electromagnetic torque, with negligible ripple).

A frequent attempt to resolve the problems linked to the presence of the slots is to eliminate them, adopting magnetic configurations in which the winding, positioned with the active conductors directly opposite the gap, is usually wound around rotoric toroidal structures, with methods that are similar to those of the Pacinotti armature.

The main defects of these solutions (that have the advantage of eliminating the harmonic electromotive forces and the parasitic torques due to the presence of the teeth, for the fact that they eliminate the teeth) are the following.

The winding with Pacinotti structure is constructively awkward to produce, as it has to be "sewn" around the toroidal ferromagnetic core, thus making hundreds of insertions, that can create constructive difficulty and irregularity of laying (both in the radial direction, with the risk of overlapping, and in the peripheral direction, with an uneven peripheral positioning of the turns of different phases, above all if the dimension of the machine is high).

The space occupied in the air-gap by the dimensions of the conductors and the relative insulating thicknesses drastically reduces the efficiency of the magnetization; in fact, while the mechanic air-gap is the space of air comprised between the surface of the permanent magnets and the most external surface of the toroidal core wound, the magnetic gap is much greater, also comprising the radial dimension occupied by the conductors. This reduces the flux delivered by the permanent magnets compared to what occurs in machines with toothed core (where the magnetic air-gap is equal to the mechanic air-gap between permanent magnets and teeth heads); thus, at equal torque requested, the presence of minor flux at the air-gap implies circulation of more intense currents, thus the development of greater losses in the windings.

In addition, as the windings are directly hit by the main magnetic flux delivered by the permanent magnets (differently from what happens in the machines fitted with slots, where only the leakage flux goes through the conductors, with a considerably lower intensity), said windings must be made with conductors accurately subdivided and transposed. Actually if conventional conductors were used (such as the rip cords, normally of the toothed-structure rotating machines, used for medium-large power applications) the above-mentioned flux, variable in time, would induce eddy currents (and therefore losses) intolerable from the thermal aspect and the performance.

We also have in the loaded operation, when current passes through said conductors and they are immersed in the flux delivered by the permanent magnets, mechanical actions (corresponding to the electromagnetic torque transmitted between stator and rotor) are applied directly on the same conductors, mechanically stressing them to a very intense extent (in the machine fitted with teeth, the forces between stator and stator are discharged on the teeth, a lot more robust, while the mechanical stresses on the conductors are limited)

WO 00/76054 discloses an axial-gap synchronous machine with 2 cycles and 3 phases.

US-A-4 774 428 discloses a three-phase synchronous electrical machine comprising a single cycle, with 8 permanent-magnet rotor poles and a stator teeth each of which is provided with a concentrated coil, alternate coils being wound in converse directions.

In view of the state of the technique described, the object of the present invention is to provide for a synchronous electrical concentrated coil machine that does not contrast the presence of the teeth, but instead uses them suitably, supporting the natural tendency to convey the flux exchanged with the excitation poles of the inductor structure.

In accordance with the present invention, said object is achieved by means of a synchronous electrical concentrated coil machine as defined in claim 1 and by means of a procedure for designing a synchronous electrical concentrated coil machine as defined in claim 15.

In accordance with the present invention, said object is also achieved by means of a method for determining the assignment of the phase and the winding direction of the coils of a synchronous electrical concentrated coil machine comprising the operations of: determining the electrical angle $\alpha_{cf}$ between the first coils of successive phase-cycles, equal to $\alpha_{cf} = (N_{dcf} + \nu/N_f)\cdot 180°$, where $N_{dcf}$ is the number of teeth per phase-cycle and $N_f$ is the number of phases;

determining the phasors separated from each other by an angle equal to said electrical angle $\alpha_{cf}$ on the basis of the phasor sequence corresponding to the number of phases of said machine; associating to said first coils of successive phase-cycles the names of said phasors previously determined; associating to the coils of each phase cycle the phase of said first coils of phase-cycles.

Thanks to the present invention a synchronous electrical concentrated coil machine can be produced with a progressive spatial staggering between poles and teeth. In fact, the numbers of the armature teeth and the inductor poles are not very different from each other; this configuration implies the achievement of electromagnetic and mechanical performances of higher quality than that of traditional machines, also resulting in numerous constructive advantages (low number of teeth, ease of winding, less length of the endwinding connections).

The use of tooth coil machines, in accordance with the present invention, presents various constructive and operational advantages, herewith described.

The concentrated coils windings are intrinsically tidier, due to the absence of overlayering of the endwindings among the active sides in the slots.

The endwindings of the tooth coils are very short, with a saving of copper, reduction of the ohmic losses and of the heating of the machine, and improvement of efficiency.

The use of concentrated coils facilitates the construction of the windings, both in small machines (in automated series production), and in medium-large machines (until now constructed manually or with semi-automatic procedures).

As the coils are all the same, their separate construction is possible and convenient as occurs in transformers: this is particularly useful in the double-side structures, without stator magnetic yoke, whose teeth can be wound one by one and then mounted in the statoric frame structure.

The adoption of production technologies similar to those of the transformers foreshadows the raising of the voltage limits in large rotating machine (now of a few tens of kilovolts): therefore, the interposition of transformers could be avoided.

Indicated with $N_f$ the number of phases, $N_d = c$ the number of teeth, $N_p = p$ the number of poles, $N_{dc}$ the number of teeth per cycle, $N_{pc}$ the number of poles per cycle, is as follows: considering that a slot corresponds to each tooth, the no. of slots/(phase-pole) q of a tooth coil machine equals: $q = c / (p \cdot N_f) = N_d / (N_p \cdot N_f) = N_{dc} / (N_{pc} \cdot N_f)$. In the hypothesis (more advantageous for the quality of performance) that $N_{dc}$ and $N_{pc}$ differ from each other only by one unit, it follows that: $q = (1 \pm 1/N_{pc}) \cdot (1/N_f) \approx 1/N_f$. Therefore, in a tooth coil three-phase machine we have $q \approx 0.33$ slots/(pole·phase). With a traditional machine we achieve good quality of waveform of electromotive force and a low ripple of the torque (or thrust) developed adopting armature structures with a no. of slots/(phase-pole) q around 5-6, while a tooth coil machine presents similar quality performances with $q \approx 1/3$: thus machines with a determined no. of poles can be made with armature structures having a very low no. of slots. In correlation, in tooth coil machines there are high numbers of poles, with reduced dimensions.

The high number of poles gives these machines special operational characteristics and that is, they rotate (or translate) at low speed, producing high torques (thrusts) and if the torque and inertia characteristics of the mechanical load are adequate, it is also possible to start up from zero speed, with synchronisation directly at the network frequency.

They can function as generators: these machines are capable of producing electromotive force of significant magnitude and frequency of industrial interest at very low rotation speed.

Another important quality, in consequence of the progressive spatial staggering between excitation poles and armature teeth, is the practical absence of disturbances due to the toothing (distortion of the waveform of the electromotive force and torque (or thrust) ripple; in the traditional permanent magnet machines the effect of "cogging" is also present with armature not powered, so much so that to attenuate it is necessary to adopt suitable values of the relative inclination between slots and poles of the opposite structures.

The characteristics and advantages of the present invention will appear evident from the following detailed description of an embodiment thereof, illustrated as non-limiting example in the enclosed drawings, in which:

Figure 1 shows the basic structure of a portion of a synchronous electrical concentrated coil machine of the type with single-side inductor with permanent magnet excitation poles, in accordance with the present invention;
Figure 2 shows the basic structure of a portion of a synchronous electrical concentrated coil machine of the type with double-side inductor with permanent magnet excitation poles, in accordance with the present invention;
Figure 3 shows a front view and a view from above of the controverse coils phase windings, in accordance with the present invention;
Figure 4 shows a front view and a view from above of the equiverse coils phase windings, in accordance with the present invention;
Figure 5 shows the basic structure of a synchronous electrical concentrated coil machine of the type with single-side inductor, with permanent magnet excitation poles, with windings in double layer and with controverse coils, in accordance with the present invention;
Figure 6 shows the basic structure of a synchronous electrical concentrated coil machine of the type with double-side inductor, with permanent magnet excitation poles, with windings in double layer and with controverse coils, in accordance with the present invention;

Figure 7 shows the basic structure of a synchronous electrical concentrated coil machine of the cylindrical gap type with two-layer three-phase controverse winding, in accordance with the present invention;

Figure 8 shows the basic structure of a synchronous electrical concentrated coil machine of the single-side flat air-gap linear type, with two-layer three-phase controverse winding, in accordance with the present invention;

Figure 9 shows the basic structure of a synchronous electrical concentrated coil machine of the double-side flat air-gap linear type, with two-layer three-phase controverse winding, in accordance with the present invention;

Figure 10 shows the basic structure of a synchronous electrical concentrated coil machine of the cylindrical air-gap linear tubular type, with ring magnets radially magnetized and with two-layer three-phase controverse winding, in accordance with the present invention;

Figure 11 shows the partial basic structure in prospective of a synchronous electrical concentrated coil machine of the rotating flat air-gap type, with two-layer controverse winding, in accordance with the present invention;

Figure 12 shows a graph with the current absorbed by a motor upon variation of the torque applied, in accordance with the present invention;

Figure 13 shows a graph with the waveform of the electromotive force measured in a probe coil wound around a tooth in a rotating machine, operating at no-load, in accordance with the present invention;

Figure 14 shows a graph with the waveform of the electromotive force measured at the terminals of the phase winding of a rotating machine, operating at no-load, in accordance with the present invention;

Figure 15 shows a graph with the simulation of the start-up transient from zero speed of the motor, with progressive increase of the load torque.

The present invention deals with a new type of synchronous electrical machines characterised by windings only constituted by concentrated coils of armature, wound around the teeth of the magnetic structure.

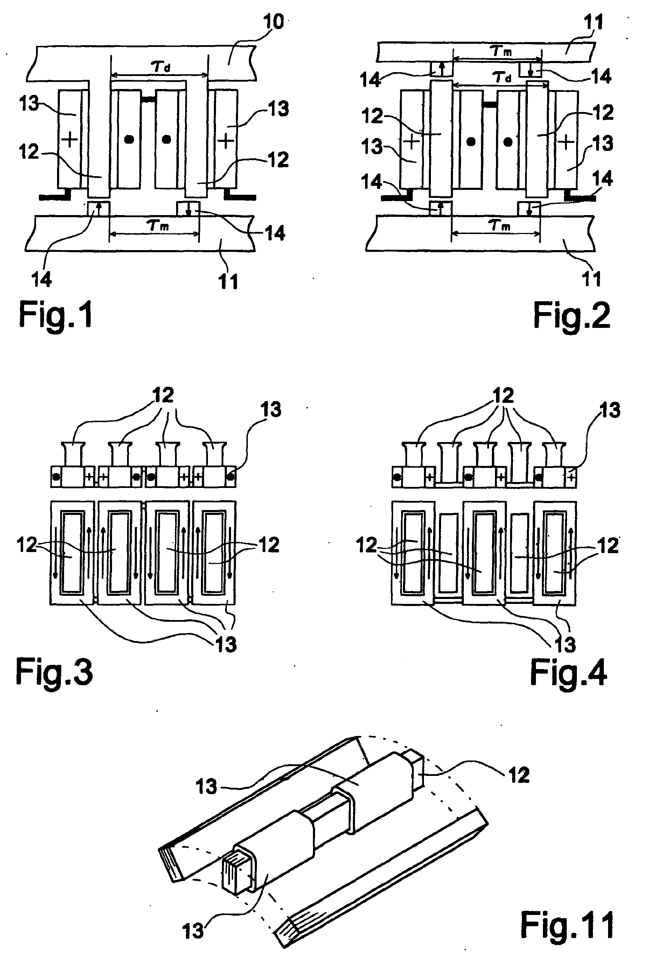

In reference to Figure 1, that shows the basic structure of a synchronous electrical concentrated coil machine of the type with single-side inductor, the yoke 10 of the armature of the stator with the stator teeth 12 can be seen on which the coils 13 are wound connected to each other; the yoke 11 of the mobile inductor on which the excitation poles 14 are placed made for example by means of permanent magnets. The arrow placed on the excitation poles 14 indicates their polarity, in particular they are placed so that the excitation poles 14 adjacent have opposite polarity.

In Figure 2 a basic structure of a synchronous electrical concentrated coil machine of the type with double-side inductor is shown. Thus there are two yokes 11 of the mobile inductor on which the excitation poles 14 are placed made for example by means of permanent magnets. There are the statoric teeth 12 on which the coils 13 are wound connected to each other.

In both the figures $\tau_d$ indicates the pitch of the statoric teeth 12 and $\tau_m$ indicates the pitch of the magnets (or excitation poles) 14.

In principle, with both the types of the Figures 1 and 2 rotating or linear machines can be produced, with flat or cylindrical air-gap, with single-side or double-side magnetisation, operating as motors or generators. The permanent magnets of the excitation poles 14 can be replaced with polar bodies fitted with windings, they also concentrated, which in such case can be denominated teeth of the mobile part (rotor or slider).

Figure 3 shows a front view and a view from above of the controverse coils phase windings and that is one coil 13 is wound on each statoric tooth 12, wound in the direction of the arrows and that is so that the adjacent coils 13 are wound controversely. In the two views the connection between one coil and the other can also be seen.

Figure 4 shows a front view and a view from above of the equiverse coils phase windings and that is for each couple of statoric adjacent teeth 12 only one tooth 12 is wound, resulting that the coils are wound equiversely. In the two views the connection between one coil and the other can also be seen. In this case consecutive teeth wound receive inductor fluxes almost in phase; therefore the equiverse connection permits the maximizing of the flux linkage and thus of the electromotive force of the phase winding.

Common characteristics of the machines described above are the almost equality between tooth pitch $\tau_d$ and the excitation poles pitch $\tau_m$. In particular it can be $\tau_d > \tau_m$ or $\tau_d < \tau_m$ (with $\tau_d \neq \tau_m$).

Windings in double layer can also be produced, in which each statoric tooth 12 of armature possesses two coils, belonging to the same phase or to different phases.

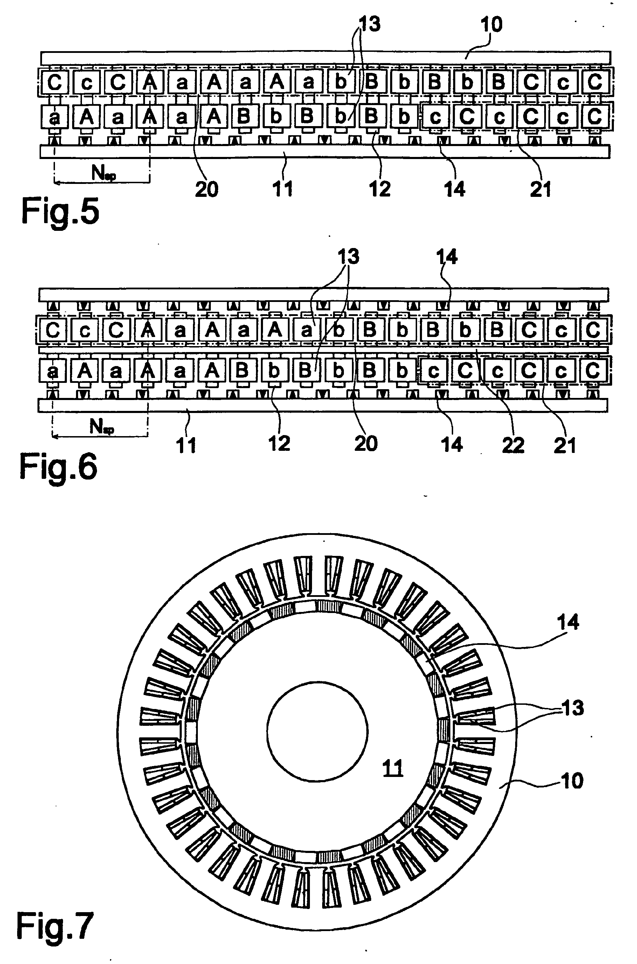

Figure 5 shows the basic structure of a synchronous electrical concentrated coil machine of the type with single-side inductor, with permanent magnet excitation poles, with windings in double layer and with controverse coils, (the type with equiverse coils can also be adopted).

In this Figure, the yoke 10 of the armature of the stator can be seen with the statoric teeth 12 on each of which are wound two coils 13, the yoke 11 of the mobile inductor, and the excitation poles 14.

Figure 6 shows the basic structure of a synchronous electrical concentrated coil machine of the type with bilateral inductor, with permanent magnet excitation poles, with windings in double layer and with controverse coils, (the type with equiverse coils can also be adopted).

In this Figure, the statoric teeth 12 can be seen, on each of which are wound two coils 13, the yoke 11 of the mobile inductor, the excitation poles 14, and a support 22 for the teeth 12, that does not have to be ferromagnetic.

In Figures 5 and 6 a first feed phase of the coils is indicated with the letters a and A, a second feed phase of the coils with the letters b and B, and a third feed phase of the coils with the letters c and C. The capital letter represents one winding direction of the coil for example anti-clockwise and the small letter the opposite winding direction of the coil for example clockwise.

Figure 7 shows the basic structure of a concentrated coil synchronous rotating electrical machine of the type with cylindrical air-gap with two-layer controverse three-phase winding, in accordance with the present invention. It is characterised by 34 poles with permanent magnets, the different polarity is represented in Figure with the presence or the absence of hatching, 36 teeth, 2 cycles along the periphery, $N_{dcf}$ = 6 teeth per phase-cycle, with displacement of layer of $N_{sp}$ = 3 teeth, with the single-side inductor. The winding characteristics of the stator in Figure 7, where, for reasons of graphic simplicity the relative letters of the phases are not shown, correspond with those illustrated in Figure 5, which in this sphere can be seen as its linearised version. In addition, only the active sides of each coil wound around the teeth are shown.

A rotating machine with flat air-gap can be imagined looking at Figures 5 and 6 as the side view of a structure with rotation symmetry (with rotation axis positioned vertically in the drawing plane); the coils of armature are positioned in couples around statoric cores in the shape of axially laminated parallelepipeds: in the double-side case of Figure 6, in front of them two circular rotoric yokes slide integral and aligned with each other, that support the permanent magnets, enclosing the stator like a sandwich. A particular characteristic of the double-side type is the absence of a ferromagnetic yoke, operating as a closing path for the tooth fluxes.

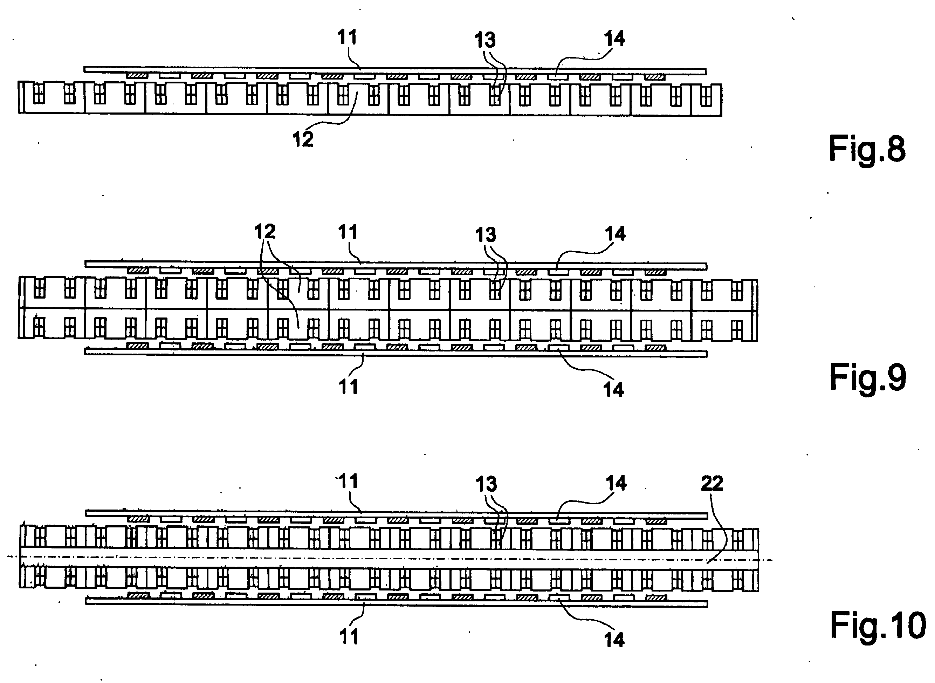

Figure 8 shows the basic structure of a synchronous electrical concentrated coil machine of the linear type with flat single-side air-gap, with two-layer controverse three-phase winding, in accordance with the present invention. It has an inductor fitted with an uneven number of permanent magnet excitation poles, with $N_{dcf}$ = 6 and $N_{pc}$ = 17 poles/cycle. The statoric magnetic circuit is made of aligned E cores.

Figure 9 shows the basic structure of a synchronous electrical concentrated coil machine of the linear type with single-side flat air-gap, with two-layer three-phase controverse winding, in accordance with the present invention. It has an inductor fitted with an uneven number of permanent magnet excitation poles, with $N_{dcf}$ = 6 and $N_{pc}$ = 17. The statoric magnetic circuit is formed of aligned E cores. In such cores, the yokes only carry out the function of mechanical support, as they are not crossed by fluxes.

Figure 10 shows the basic structure of a synchronous electrical concentrated coil machine of the tubular linear type with cylindrical air-gap, with ring magnets magnetized radially (alternatively towards the inside and towards the outside) and with two-layer three-phase controverse winding, in accordance with the present invention. It has an inductor fitted with an uneven number of permanent magnet excitation poles, with $N_{dcf}$ = 6 and $N_{pc}$ = 17. The statoric magnetic circuit is cylindrical, internal, splined, with a central core in ferrite, or other ferromagnetic material with high electric resistivity, and disk teeth, laminated and piled on said core. The coils are bobbin-wound in the grooves of the central cylindrical armature structure.

In Figures 8, 9 and 10 for reasons of graphic simplicity, the windings are represented without indicating their assigned phases of the coils; in addition, only the active sides of each coil wound around the teeth are shown. For the succession assigned to the phases, refer to that in Figures 5 and 6.

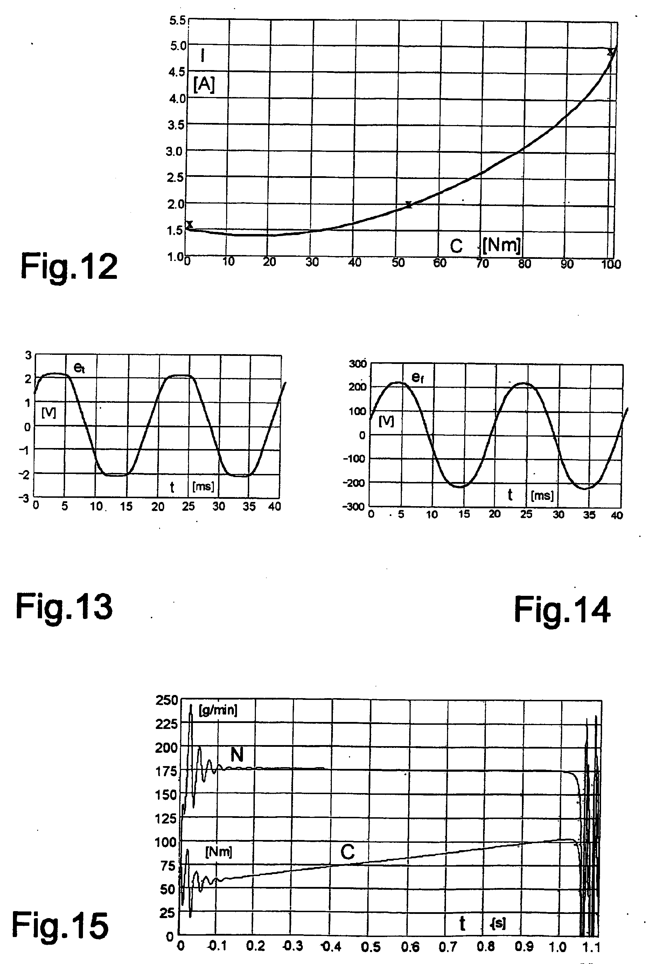

The partial basic structure in prospective of a synchronous electrical concentrated coil machine of the rotating type with flat air-gap is shown in Figure 11, with two-layer controverse winding, in accordance with the present invention. Some statoric cores are shown in this figure, of which, as an example, only one wound with a couple of coils. The inductor poles (not shown), mounted on rotoric yokes, are aligned to the cores of the coils at one end (single-side structure) or to both ends (double-side structure).

In the single-side case, less convenient, the ends of the cores positioned on the opposite side in relation to the corona of inductor poles must be connected to each other by means of a statoric yoke.

In the double-side case, the statoric cores are magnetically separated from each other (only a non-magnetic support is required, not shown in the Figure); concerning the rotor, there are two rotoric yokes integral with each other: the inductor poles axially counter-posed are aligned to each other.

An important peculiarity of the linear tooth coil machines with flat air-gap (for example those of Figures 8 and 9) and cylindrical (like that of Figure 10) is the excellent operating symmetry, both at no-load (symmetry of the phase electromotive forces) and in loaded conditions (balance of the circulating currents): this property (linked to the action of a number of inductor poles exactly the same as that of one cycle, $N_{pc}$ = 17 in the Figures mentioned) does not find correspondence in the linear machines with windings distributed traditionally, typically affected by dissymmetry and operating imbalances between the various phases.

In general, for the tooth coil electrical machines the following definitions and properties are valid (see Figures 5 and 6).

With reference to the relative arrangement between armature teeth and excitation poles facing the air-gap, the cycle 20 is the part of the magnetic structure (or periphery) at which distance two couples (tooth - pole) present the same common position: therefore the distribution of the coils to the various phases and their winding direction is repeated from one cycle to the next.

Basically, the number of the cycles could be any (the examples of the Figures 8, 9, 10 refer to the structure with only one cycle): nevertheless, in the case of structures of rotating machines (with cylindrical or flat air-gap), it is advisable that such number exceeds or is at least equal to 2, to avoid non-compensated magnetic attractions between stator and rotor.

The phase-cycle 21 with reference to one layer, is the portion of one cycle to which adjacent coils of the same phase extend.

$N_{dc}$ = (No. of armature teeth)/(cycle).

$N_{bc}$ = (No. of armature coils)/(cycle).

$N_{dc}$ and $N_{bc}$ must be multiples of the no. of phases $N_f$.

$N_{dcf}$ = (No. of armature teeth) / (phase-cycle).

$N_{bcf}$ = (No. of armature coils) / (phase-cycle).

$N_{dc} = N_f N_{dcf}$.

$N_{bc} = N_f N_{bcf}$.

In the case of controverse windings $N_{bcf} = N_{dcf}$.

In the case of equiverse windings, having to be $N_{bcf} = N_{dcf}/2$, thus $N_{dcf}$ must be an equal whole number.

$N_{bcf}$ can be any whole number.

$N_{pc}$ = (No. of excitation poles) / (cycle).

$\nu$ = module of the difference between $N_{pc}$ and $N_{dc}$.

Thus we can write: $N_{pc} = N_{dc} \pm \nu$. The best choice corresponds to $\nu$ = 1; nevertheless, with progressive worsening of the performances (reduction of the winding factor of the main field), integer values of $\nu$ higher than unity can be adopted, up to a limit value $\nu_{max} = 2 \cdot N_f$ (in correspondence with this value the annulment of the aforesaid winding factor occurs, which corresponds with a nil electromotive force resulting at the terminals).

Therefore, with reference to the best choice, corresponding to $\nu$ = 1, choice can be made between the following conditions, higher or lower $N_{pc} = N_{dc} + 1 = N_{pcs}$, or $N_{pc} = N_{dc} - 1 = N_{pci}$.

The no. of excitation poles $N_p = N_{pc} \cdot N_c$ of a rotating machine must be even; therefore, if $N_{pc}$ is even, the no. of cycles $N_c$ can be any whole number; vice versa, with $N_{pc}$ uneven, $N_c$ must be even.

The no. of excitation poles $N_p = N_{pc} \cdot N_c$ of a linear machine can be uneven; in such case, there are no constrictions for $N_c$.

As the cycles are identical to each other, the no. of cycles $N_c$ is also equal to the maximum no. of paths of each phase in parallel.

Said X's, x the armature coils of the phase X (X = A, B, C; x = a, b, c), for assigning the layer coils with the phases and the definition of the path direction, the electrical angles $\varepsilon$, linked to mechanical angles $\mu$ of the well-known relation: $\varepsilon = (N_p/2) \cdot \mu$, are taken into consideration; as the electrical angle $\alpha_d$ between adjacent teeth equals $\alpha_d = (N_{pc}/N_{dc}) \cdot 180°$, the following rules are obtained.

With reference to the coils of only one layer, the electrical angle $\alpha_{cf}$ between the first coils of successive phase-cycles, hereinafter called parent coils, is $\alpha_{cf} = (N_{dcf} + \nu/N_f) \cdot 180°$: the evaluation of $\alpha_{cf}$ (to reduce to inside 0° - 360°, subtracting the suitable whole number of round angles) enables such parent coils to be attributed correctly to the different phases.

For three-phase and two-phase windings there are well-known phasor sequences - esaphase AcBaCb and tetraphase ABab, respectively with staggering of 60° and 90° electrical between adjacent phasors.

When the attribution of the parent coil of a first phase-cycle (which we presume corresponds to the name Y, among those of the phasor diagram) to a certain phase has been defined (including winding direction), the parent coil of the adjacent phase-cycle is attributed to the phase whose name Z is that of the phasor which, in the phase sequence considered (AcBaCb for three-phase machines; ABab for two-phase machines), stands $\alpha_{cf}$ electrical angles from Y (in one direction or in the other); similar attribution is made for all the successive phase-cycles (always with the same path direction as the phasor diagram, for example clockwise). For example, attributing the B to the first parent coil, in the case in which $N_{dcf}$ = 6, $\nu$ = 1, $N_f$ = 3, we have $\alpha_{cf}$ = 60°, the name 60° distant from B will be attributed to the second parent coil and thus a, and so on consecutively.

The sequence of the coils of one cycle-phase (for example $N_{bcf}$ = 6) will be with controverse winding XxXxXx (or xXxXxX); and with equiverse winding XXXXXX (or xxxxxx), starting from the parent coil.

In the above example, with controverse winding, the first phase-cycle will be with the names BbBbBb and the second phase-cycle the names aAaAaA.

In the case of windings in two layers, the second layer presents the same phase denominations as the layer already attributed, but with a peripheral displacement of $N_{sp}$ teeth (the winding direction of each coil of each cycle-phase of the second layer coincides with that of the phase-cycle of the same phase of the other layer in the case of $N_{sp}$ even, while it is inverted if $N_{sp}$ is uneven): the displacement of layer carries out the same electromagnetic function which, in the distributed windings of the traditional machines, it is consequent to the shortening of the pitch of the windings, that is the attenuation of the winding factors of the electromotive forces of the harmonic fields of lower order. For example, in the case of three-phase structures, with $v = 1$, the choice of $N_{sp}$ that optimises the waveform of the electromotive force at the terminals is the closest to $N_{dcf}/2$.

From the expression of $\alpha_{cf}$ the impossibility to adopt $v = N_f$, which would correspond to parent coils of successive phase-cycles with multiple staggering of 180° appears evident: in fact, this result (which would correspond, regardless of the winding direction, to belonging to the same phase) is incompatible with the hypothesis of a structure with $N_f$ phases.

From the study of the vector diagrams representing the composition of the electromotive forces of the coils of one cycle-phase (which is associated, for the order harmonic h =1, 3, 5, 7, 9,... to a distribution factor $k_{dh}$) and of the composition of the layer electromotive forces (which is associated, again for the harmonic h, to a displacement factor $k_{sph}$) the following expressions result:

$$ k_{dh} = \frac{\sin\left(h \cdot 90° \cdot \dfrac{v}{N_f}\right)}{N_{bcf} \cdot \sin\left(h \cdot \dfrac{v \cdot 90°}{N_f \cdot N_{bcf}}\right)} \; ; \quad k_{sph} = \cos\left(h \cdot N_{sp} \cdot \frac{v \cdot 90°}{N_f \cdot N_{dcf}}\right) \; ; $$

the winding factor is given by:

$$ k_{ah} = k_{dh} \cdot k_{sph}. $$

From simple elaborations it can be deduced that, for the main field (which corresponds to the fundamental component for h = 1 of the electromotive force), the highest values of the winding factor are obtained for $v = 1$; in addition, again for $v = 1$ said values correspond to those of the winding factors of the traditional machines with distributed windings, where however a number of slots/(pole·phase) q is considered and a shortening of the pitch of the windings numerically equal respectively to the number $N_{bcf}$ and to the displacement of layer $N_{sp}$ of the tooth coil machines.

Thus, for the three-phase tooth coil rotating machines, with $v = 1$, Table 1 gives the values of $N_d$ and Np, for the lower values of $N_{dcf}$ and $N_c$; the attribution succession $S_{cf}$ to the phases of the parent coils of the phase-cycles of 2 adjacent cycles (said succession of the phase-cycles) is also given: in the Table, $S_{cfi}$ indicates the succession $S_{cf}$ relating to the choice of the low poles number $N_{pci} = N_{dc} - 1$, while $S_{cfs}$ is the succession $S_{cf}$ relating to the choice of the high poles number $N_{pcs} = N_{dc} + 1$.

Once the parent coils of all the phase-cycles have been assigned to the phases, the successive coils of each cycle-phase assume the same letter as its own parent coil, with equiverse path direction (XXX or xxx, with $N_{bcf} = 3$) or with controverse path direction (XxX or xXx, with $N_{bcf}= 3$).

Similar Tables can be adopted for two-phase machines, or with no. of phases different from 2 and 3.

TABLE 1

| Three-phase controverse windings | | | | | | | | | | |
|---|---|---|---|---|---|---|---|---|---|---|
| $N_{dcf}$ | $N_{bcf}$ | $N_{dc}$ | $N_{pci}$ | $N_{pcs}$ | $N_c$ | $N_d$ | $N_{pi}$ | $S_{cfi}$ | $N_{ps}$ | $S_{cfs}$ |
| 2 | 2 | 6 | 5 | 7 | 2 | 12 | 10 | AcBaCb | 14 | AbCaBc |
| 3 | 3 | 9 | 8 | 10 | 3 | 27 | 24 | ACBACB | 30 | ABCABC |
| 4 | 4 | 12 | 11 | 13 | 2 | 24 | 22 | AcBaCb | 26 | AbCaBc |
| 5 | 5 | 15 | 14 | 16 | 3 | 45 | 42 | ACBACB | 48 | ABCABC |
| 6 | 6 | 18 | 17 | 19 | 2 | 36 | 34 | AcBaCb | 38 | AbCaBc |
| | | | | | | | | | | |

(continued)

| Three-phase equiverse windings | | | | | | | | | | |
|---|---|---|---|---|---|---|---|---|---|---|
| $N_{dcf}$ | $N_{bcf}$ | $N_{dc}$ | $N_{pci}$ | $N_{pcs}$ | $N_c$ | $N_d$ | $N_{pi}$ | $S_{cfi}$ | $N_{ps}$ | $S_{cfs}$ |
| 2 | 1 | 6 | 5 | 7 | 2 | 12 | 10 | AcBaCb | 14 | AbCaBc |
| 4 | 2 | 12 | 11 | 13 | 2 | 24 | 22 | AcBaCb | 26 | AbCaBc |
| 6 | 3 | 18 | 17 | 19 | 2 | 36 | 34 | AcBaCb | 38 | AbCaBc |
| 8 | 4 | 24 | 23 | 25 | 2 | 48 | 46 | AcBaCb | 50 | AbCaBc |
| 10 | 5 | 30 | 29 | 31 | 2 | 60 | 58 | AcBaCb | 62 | AbCaBc |

A cylindrical air-gap prototype has been constructed, of small size, obtained from a commercial asynchronous motor, in which the stator has been rewound, while the rotor has been totally redone, making it with permanent magnets.

In regard to the stator winding, this is of the controverse type in two layers (each tooth wound by two coils), according to the diagram of Figure 7 (in linearized form, the configuration of Figure 5).

The main characteristics of said machine are those in Table 2.

TABLE 2

| | |
|---|---|
| Stator outside diameter [mm] | 220 |
| Diameter at the air-gap [mm] | 140 |
| Length of lamination stack [mm] | 85 |
| No. stator slots | 36 |
| No. permanent magnets | 34 |
| Dimensions of the permanent magnets [mm] | 85x10x3 |
| Residual flux density $B_r$ [T] | 1,2 |
| Coercive force $H_c$ [kA/m] | 700 |
| Mechanical air-gap [mm] | 0,4 |
| No. turns/tooth coil | 46 |
| Diameter of statoric wire [mm] | 0,63 |

Numerical simulations and experimental tests have been carried out on this machine.

The calculated curve is shown in Figure 12, on the basis of the equivalent circuit, of the RMS value of the phase current absorbed in operating as a motor, upon increasing the torque applied, up to the loss of synchronised operation, together with the measured points (x), for operating with null, nominal and "pull out" torque. The excellent correspondence confirms the validity of the type of electrical tooth coil machine.

Figures 13 and 14 show the waveforms measured of the electromotive forces in no-load operation, at a speed of N = 176,47 g/min (to which the frequency is equal to 50 Hz); in Figure 13, $e_t$ is the electromotive force measured in a probe coil of 10 turns, wound around a stator tooth; in Figure 14, $e_f$ is the electromotive force measured at the ends of a phase winding. As can be seen, while the tooth electromotive force has a waveform approximately trapezoidal, that of the phase is considerably sinusoidal, thanks to the effect of composition due to the staggering between the electromotive forces of tooth coils, that give a resulting $e_f$.

The simulation of the start-up transient of the machine is represented in Figure 15, fed at $V_{linea}$ = 380 V, 50 Hz, with initially nominal resistant torque (53 Nm) and the synchronisation from still; successively the torque increases, until the pitch is lost. The good operating stability is evident, also as confirmation of the "pull out" torque limits.

The tooth coil machines, in accordance with the present invention, present interesting elements in many application sectors, hereinafter described.

Motor for low speed and high torque (force), without the use of gearing: direct drive can be achieved, in alternative to gearmotors, both with mains feeding and start-up and through inverter. The permanent magnet excitation guarantees that high power factors are achieved and that satisfying performance values are maintained.

Ground propulsion motors: particularly suitable is the flat air-gap rotating type because it can be easily integrated in the wheels (motor-wheels) and is capable of achieving high torque/mass and torque/inertia ratios.

Large motors for electrical ship propulsion and for large industrial drives: synchronous motors are presently used in these sectors, which to avoid the use of mechanical reduction gears, must be powered at low frequency, by means of cycle convertors; the use of tooth coil motors permits them to be powered by inverter, with considerable advantages in terms of waveforms, torque and speed regulation, low harmonics of current and torque.

Generators with high number of poles for waterpower plants with slow turbines and for aero generators without speed multipliers: the excellent quality of the waveform of the voltage at the terminals, both in no-load operating and in loaded operating, makes tooth coil machines an interesting competitor for classic salient pole alternators. In this case, for the need of regulating the voltage, it is more suitable to adopt inductors with excitation windings. Therefore, the tooth coil machine assumes the appearance of a double salient structure, in which all the windings are of the concentrated type, and there is very little difference between the no. of stator and rotor teeth.

Motors for linear drives: the adoptability of modular stator structures, using standard "E" shape laminations, commonly used for constructing small monophase ironclad transformers, permits the easy and economical construction of linear guides of any length. In addition, the adoption of the double-side structure enables the high transversal attraction to be neutralized, typical of the single-side configurations, doubling the propulsion force.

Tubular motors for linear drives: this configuration, in which it is possible to couple the parts in relative motion by the means of the use of contact cylinders in antifriction material (for example teflon), presents a cylindrical symmetry that very satisfactorily annuls each side thrust. In addition, this configuration, quite compact, can be used very well as actuator in many robotics, mechatronics and bio-mechanics applications.

## Claims

1. Synchronous electrical concentrated coil machine comprising:

    a plurality of teeth (12) positioned on the stator;
    a plurality of concentrated coils (13) wound around said teeth, suitable for constituting at least one cycle;
    a plurality of inductor poles (14);

    wherein
    the absolute value $\nu$ of the difference between the number of said plurality of poles per cycle $N_{pc}$ and the number of said plurality of teeth per cycle $N_{dc}$ is less than two times the number of the phases $N_f$;
    the electrical angle $\alpha_{cf}$ between the first coils of successive phase-cycles is $\alpha_{cf} = (N_{dcf} + \nu/N_f) \cdot 180°$, where a phase-cycle is formed by a number $N_{bc}$ of adjacent coils within a cycle which are electrically connected together in series, $N_{dcf}$ is the number of teeth per phase-cycle; and
    the phase associated to said first coils of successive phase-cycles and the winding direction of said first coils of successive phase-cycles are determined by phasors separated from each other by an angle equal to said electrical angle $\alpha_{cf}$ of the phasor sequence of the number of phases of said machine, **characterised in that** said plurality of concentrated coils wound around said teeth include two coils for each tooth and a layer displacement $N_{sp}$ which is the closest to $N_{dcf}/2$ is chosen.

2. Synchronous electrical machine in accordance with claim 1, **characterised in that** the phase of said first coils is assigned to the coils of each cycle.

3. Synchronous electrical machine in accordance with claim 1 **characterised in that** it represents a generator.

4. Synchronous electrical machine in accordance with claim 1 **characterised in that** it represents a motor.

5. Synchronous electrical machine in accordance with claim 1 **characterised in that** said plurality of poles is constituted of permanent magnets.

6. Synchronous electrical machine in accordance with claim 1 **characterised in that** said plurality of poles is constituted of wound polar bodies, fitted with suitable shaped pole shoes.

7. Synchronous electrical machine in accordance with claim 1 **characterised in that** said plurality of concentrated coils are equiverse.

8. Synchronous electrical machine in accordance with claim 1 **characterised in that** said plurality of concentrated coils are controverse.

9.  Synchronous electrical machine in accordance with claim 1 **characterised in that** said electrical machine is rotating with cylindrical air-gap.

10. Synchronous electrical machine in accordance with claim 1 **characterised in that** said electrical machine is rotating with flat air-gap, with single-side structure.

11. Synchronous electrical machine in accordance with claim 1 **characterised in that** said electrical machine is rotating with flat air-gap, with double-side structure and stator teeth without ferromagnetic yoke for closing the fluxes.

12. Synchronous electrical machine in accordance with claim 1 **characterised in that** said electrical machine is linear with cylindrical air-gap.

13. Synchronous electrical machine in accordance with claim 1 **characterised in that** said electrical machine is linear with flat air-gap, with single-side structure.

14. Synchronous electrical machine in accordance with claim 1 **characterised in that** said electrical machine is linear with flat gap, with bilateral structure and stator teeth that do not need ferromagnetic yoke for closing the fluxes.

15. Procedure for designing a synchronous electrical concentrated coil machine comprising:

    a plurality of teeth (12) positioned on the stator;
    a plurality of concentrated coils (13) wound around said teeth, suitable for constituting at least one cycle;
    a plurality of inductor poles (14);

    **characterised in that**
    the absolute value $\nu$ of the difference between the number of said plurality of poles per cycle $N_{pc}$ and the number of said plurality of teeth per cycle $N_{dc}$ is chosen to be less than two times the number of the phases $N_f$;
    the electrical angle $\alpha_{cf}$ between the first coils of successive phase-cycles is $\alpha_{cf} = (N_{dcf} + \nu/N_f) \cdot 180°$, where a phase-cycle is formed by a number $N_{bc}$ of adjacent coils within a cycle which are electrically connected together in series, $N_{dcf}$ is the number of teeth per phase-cycle; and
    the phase associated to said first coils of successive phase-cycles and the winding direction of said first coils of successive phase-cycles are determined by phasors separated from each other by an angle equal to said electrical angle $\alpha_{cf}$ of the phasor sequence of the number of phases of said machine.

16. Procedure in accordance with claim 15 **characterised in that** the phase of said first coils is assigned to the coils of each cycle.

17. Procedure in accordance with claim 15 **characterised in that** it represents a generator.

18. Procedure in accordance with claim 15 **characterised in that** it represents a motor.

19. Procedure in accordance with claim 15 **characterised in that** said plurality of poles is constituted of permanent magnets.

20. Procedure in accordance with claim 15 **characterised in that** said plurality of poles is constituted of wound polar bodies, fitted with suitable shaped pole shoes.

21. Procedure in accordance with claim 15 **characterised in that** said plurality of concentrated coils are equiverse.

22. Procedure in accordance with claim 15 **characterised in that** said plurality of concentrated coils are controverse.

23. Procedure in accordance with claim 15 **characterised in that** said plurality of concentrated coils wound around said teeth include two coils for each tooth and a layer displacement $N_{sp}$ which is the closest to $N_{dcf}/2$ is chosen.

24. Procedure in accordance with claim 15 **characterised in that** said electrical machine is rotating with cylindrical air-gap.

25. Procedure in accordance with claim 15 **characterised in that** said electrical machine is rotating with flat air-gap, with single-side structure.

26. Procedure in accordance with claim 15 **characterised in that** said electrical machine is rotating with flat air-gap, with double-side structure and stator teeth without ferromagnetic yoke for closing the fluxes.

27. Procedure in accordance with claim 15 **characterised in that** said electrical machine is linear with cylindrical air-gap.

28. Procedure in accordance with claim 15 **characterised in that** said electrical machine is linear with flat air-gap, with single-side structure.

29. Procedure in accordance with claim 15 **characterised in that** said electrical machine is linear with flat gap, with bilateral structure and statoric teeth that do not need ferromagnetic yoke for closing the fluxes.

30. Method for determining the assignment of the phase and the winding direction of the coils of a synchronous electrical concentrated coil machine, comprising the steps of:

  determining the electrical angle $\alpha_{cf}$ between the first coils of successive phase-cycles is $\alpha_{cf} = (N_{dcf} + v/N_f) \cdot 180°$, where $N_{dcf}$ is the number of teeth per phase-cycle and $N_f$ is the number of phases;
  determining phasors separated from each other by an angle equal to said electrical angle $\alpha_{cf}$ on the basis of the phase sequence of the number of phases of said machine;
  associating to said first coils of successive phase-cycles the names of said phasors previously determined;
  associating to the coils of each phase-cycle the phase of said first coils of phase-cycles.

31. Method for determining the assignment of the phase and the winding direction of the coils of a synchronous electrical concentrated coil machine in accordance with claim 30 **characterised in that** the step of associating the coils of each phase-cycle to the phase of said first coils of phase-cycles comprises the step of associating a winding direction to the adjacent controverse coils.

32. Method for determining the assignment of the phase and the winding direction of the coils of a synchronous electrical concentrated coil machine in accordance with claim 30 **characterised in that** the step of associating the coils of each phase-cycle to the phase of said first coils of phase-cycles comprises the step of associating a winding equiverse direction to the adjacent coils.

**Patentansprüche**

1. Elektrischer Synchronmotor mit konzentrierter Wicklung, der folgendes aufweist:

  eine Vielzahl von am Stator positionierten Zähnen (12);
  eine Vielzahl von um die Zähne gewickelten konzentrierten Wicklungen (13), die zum Bilden wenigstens eines Zyklus geeignet sind;
  eine Vielzahl von Induktorpolen (14);

  wobei
  der Absolutwert v der Differenz zwischen der Anzahl der Vielzahl von Polen pro Zyklus $N_{pc}$ und der Anzahl der Vielzahl von Zähnen pro Zyklus $N_{dc}$ kleiner als das zweifache der Anzahl der Phasen $N_f$ ist;
  der elektrische Winkel $\alpha_{cf}$ zwischen den ersten Wicklungen von aufeinander folgenden Phasenzyklen $\alpha_{cf} = (N_{dcf} + v/N_f) \cdot 180°$ ist, wobei ein Phasenzyklus durch eine Anzahl $N_{bc}$ von benachbarten Wicklungen innerhalb eines Zyklus ausgebildet ist, die miteinander elektrisch in Reihe geschaltet sind, und $N_{dcf}$ die Anzahl von Zähnen pro Phasenzyklus ist; und
  die zu den ersten Wicklungen von aufeinander folgenden Phasenzyklen gehörende Phase und die Wickelrichtung der ersten Wicklungen von aufeinander folgenden Phasenzyklen durch Wechselstromzeiger bestimmt werden, die voneinander um einen Winkel getrennt sind, der gleich dem elektrischen Winkel $\alpha_{cf}$ der Wechselstromzeigersequenz der Anzahl von Phasen des Motors ist, **dadurch gekennzeichnet, dass** die Vielzahl von konzentrierten Wicklungen, die um die Zähne gewickelt sind, zwei Wicklungen für jeden Zahn enthält und ein Schichtversatz $N_{sp}$, der $N_{dcf}/2$ am nächsten ist, gewählt ist.

**2.** Elektrischer Synchronmotor nach Anspruch 1, **dadurch gekennzeichnet, dass** die Phase der ersten Wicklungen den Wicklungen jedes Zyklus zugeordnet ist.

**3.** Elektrischer Synchronmotor nach Anspruch 1, **dadurch gekennzeichnet, dass** er einen Generator darstellt.

**4.** Elektrischer Synchronmotor nach Anspruch 1, **dadurch gekennzeichnet, dass** er einen Motor darstellt.

**5.** Elektrischer Synchronmotor nach Anspruch 1, **dadurch gekennzeichnet, dass** die Vielzahl von Polen aus Permanentmagneten gebildet ist.

**6.** Elektrischer Synchronmotor nach Anspruch 1, **dadurch gekennzeichnet, dass** die Vielzahl von Polen aus gewickelten Polkörpern gebildet ist, die mit geeignet geformten Polschuhen versehen sind.

**7.** Elektrischer Synchronmotor nach Anspruch 1, **dadurch gekennzeichnet, dass** die Vielzahl von konzentrierten Wicklungen zueinander gerichtet sind.

**8.** Elektrischer Synchronmotor nach Anspruch 1, **dadurch gekennzeichnet, dass** die Vielzahl von konzentrierten Wicklungen gegeneinander gerichtet sind.

**9.** Elektrischer Synchronmotor nach Anspruch 1, **dadurch gekennzeichnet, dass** sich der elektrische Motor mit einem zylindrischen Luftspalt dreht.

**10.** Elektrischer Synchronmotor nach Anspruch 1, **dadurch gekennzeichnet, dass** sich der elektrische Motor mit einem flachen Luftspalt mit Einzelseitenstruktur dreht.

**11.** Elektrischer Synchronmotor nach Anspruch 1, **dadurch gekennzeichnet, dass** sich der elektrische Motor mit einem flachen Luftspalt mit Doppelseitenstruktur und Statorzähnen ohne ferromagnetisches Joch zum Schließen der Flüsse dreht.

**12.** Elektrischer Synchronmotor nach Anspruch 1, **dadurch gekennzeichnet, dass** der elektrische Motor linear mit einem zylindrischen Luftspalt ist.

**13.** Elektrischer Synchronmotor nach Anspruch 1, **dadurch gekennzeichnet, dass** der elektrische Motor linear mit einem zylindrischen Luftspalt mit Einzelseitenstruktur ist.

**14.** Elektrischer Synchronmotor nach Anspruch 1, **dadurch gekennzeichnet, dass** der elektrische Motor linear mit einem zylindrischen Luftspalt mit zweiseitiger Struktur und Statorzähnen, die kein ferromagnetisches Joch zum Schließen der Flüsse benötigen, ist.

**15.** Verfahren zum Entwickeln eines elektrischen Synchronmotor mit konzentrierter Wicklung, der folgendes aufweist:

eine Vielzahl von am Stator positionierten Zähnen (12);
eine Vielzahl von um die Zähne gewickelten konzentrierten Wicklungen (13), die zum Bilden wenigstens eines Zyklus geeignet sind;
eine Vielzahl von Induktorpolen (14);

**dadurch gekennzeichnet, dass**
der Absolutwert v der Differenz zwischen der Anzahl der Vielzahl von Polen pro Zyklus $N_{pc}$ und der Anzahl der Vielzahl von Zähnen pro Zyklus $N_{dc}$ kleiner als das zweifache der Anzahl der Phasen $N_f$ ist;
der elektrische Winkel $\alpha_{cf}$ zwischen den ersten Wicklungen von aufeinander folgenden Phasenzyklen $\alpha_{cf} = (N_{dcf} + v/N_f) \cdot 180°$ ist, wobei ein Phasenzyklus durch eine Anzahl $N_{bc}$ von benachbarten Wicklungen innerhalb eines Zyklus ausgebildet ist, die miteinander elektrisch in Reihe geschaltet sind, und $N_{dcf}$ die Anzahl von Zähnen pro Phasenzyklus ist; und
die zu den ersten Wicklungen von aufeinander folgenden Phasenzyklen gehörende Phase und die Wickelrichtung der ersten Wicklungen von aufeinander folgenden Phasenzyklen durch Wechselstromzeiger bestimmt werden, die voneinander um einen Winkel getrennt sind, der gleich dem elektrischen Winkel $\alpha_{cf}$ der Wechselstromzeigersequenz der Anzahl von Phasen des Motors ist.

**12**

**16.** Verfahren nach Anspruch 15, **dadurch gekennzeichnet, dass** die Phase der ersten Wicklungen den Wicklungen jedes Zyklus zugeordnet ist.

**17.** Verfahren nach Anspruch 15, **dadurch gekennzeichnet, dass** er einen Generator darstellt.

**18.** Verfahren nach Anspruch 15, **dadurch gekennzeichnet, dass** er einen Motor darstellt.

**19.** Verfahren nach Anspruch 15, **dadurch gekennzeichnet, dass** die Vielzahl von Polen aus Permanentmagneten gebildet ist.

**20.** Verfahren nach Anspruch 15, **dadurch gekennzeichnet, dass** die Vielzahl von Polen aus gewickelten Polkörpern gebildet ist, die mit geeignet geformten Polschuhen versehen sind.

**21.** Verfahren nach Anspruch 15, **dadurch gekennzeichnet, dass** die Vielzahl von konzentrierten Wicklungen zueinander gerichtet sind.

**22.** Verfahren nach Anspruch 15, **dadurch gekennzeichnet, dass** die Vielzahl von konzentrierten Wicklungen gegeneinander gerichtet sind.

**23.** Verfahren nach Anspruch 15, **dadurch gekennzeichnet, dass** die Vielzahl von konzentrierten Wicklungen, die um die Zähne gewickelt werden, zwei Wicklungen für jeden Zahn enthält und ein Schichtversatz $N_{sp}$, der $N_{dcf}/2$ am nächsten ist, gewählt wird.

**24.** Verfahren nach Anspruch 15, **dadurch gekennzeichnet, dass** sich der elektrische Motor mit einem zylindrischen Luftspalt dreht.

**25.** Verfahren nach Anspruch 15, **dadurch gekennzeichnet, dass** sich der elektrische Motor mit einem flachen Luftspalt mit Einzelseitenstruktur dreht.

**26.** Verfahren nach Anspruch 15, **dadurch gekennzeichnet, dass** sich der elektrische Motor mit einem flachen Luftspalt mit Doppelseitenstruktur und Statorzähnen ohne ferromagnetisches Joch zum Schließen der Flüsse dreht.

**27.** Verfahren nach Anspruch 15, **dadurch gekennzeichnet, dass** der elektrische Motor linear mit einem zylindrischen Luftspalt ist.

**28.** Verfahren nach Anspruch 15, **dadurch gekennzeichnet, dass** der elektrische Motor linear mit einem zylindrischen Luftspalt mit Einzelseitenstruktur ist.

**29.** Verfahren nach Anspruch 15, **dadurch gekennzeichnet, dass** der elektrische Motor linear mit einem zylindrischen Luftspalt mit zweiseitiger Struktur und Statorzähnen, die kein ferromagnetisches Joch zum Schließen der Flüsse benötigen, ist.

**30.** Verfahren zum Bestimmen der Zuordnung der Phase und der Wickelrichtung der Wicklungen eines elektrischen Synchronmotor mit konzentrierter Wicklung, das die folgenden Schritte aufweist:

Bestimmen des elektrischen Winkels $\alpha_{cf}$ zwischen den ersten Wicklungen von aufeinander folgenden Phasenzyklen $\alpha_{cf} = (N_{dcf} + v/N_f) \cdot 180°$, wobei $N_{dcf}$ die Anzahl von Zähnen pro Phasenzyklus ist und $N_f$ die Anzahl von Phasen ist;
Bestimmen von Wechselstromzeigern, die voneinander um einen Winkel getrennt sind, der gleich dem elektrischen Winkel $\alpha_{cf}$ ist, auf der Basis der Phasensequenz der Anzahl von Phasen des Motors;
Zuordnen der Namen der zuvor bestimmten Wechselstromzeiger zu den ersten Wicklungen aufeinander folgender Phasenzyklen; und
Zuordnen der Phase der ersten Wicklungen von Phasenzyklen zu den Wicklungen jedes Phasenzyklus.

**31.** Verfahren zum Bestimmen der Zuordnung der Phase und der Wickelrichtung der Wicklungen eines elektrischen Synchronmotor mit konzentrierter Wicklung nach Anspruch 30, **dadurch gekennzeichnet, dass** der Schritt zum Zuordnen der Wicklungen jedes Phasenzyklus zu der Phase der ersten Wicklungen von Phasenzyklen den Schritt zum Zuordnen einer Wickelrichtung zu den benachbarten gegeneinander gerichteten Wicklungen aufweist.

**32.** Verfahren zum Bestimmen der Zuordnung der Phase und der Wickelrichtung der Wicklungen eines elektrischen Synchronmotor mit konzentrierter Wicklung nach Anspruch 30, **dadurch gekennzeichnet, dass** der Schritt zum Zuordnen der Wicklungen jedes Phasenzyklus zu der Phase der ersten Wicklungen von Phasenzyklen den Schritt zum Zuordnen einer zueinander gerichteten Wickelrichtung zu den benachbarten Wicklungen aufweist.

**Revendications**

**1.** Machine électrique synchrone à bobinages concentrés comprenant :

une pluralité de dents (12) positionnées sur le stator ;
une pluralité de bobinages concentrés (13) enroulés autour desdites dents, adaptés pour constituer au moins un cycle ;
une pluralité de pôles d'induction (14) ;

dans laquelle :

la valeur absolue $\nu$ de la différence entre le nombre desdits pôles par cycle $N_{pc}$ et le nombre desdites dents par cycle $N_{dc}$ est inférieure à deux fois le nombre de phases $N_f$ ;
l'angle électrique $\alpha_{cf}$ entre les premiers bobinages de cycles de phases successives est $\alpha_{cf} = (N_{def} + \nu/N_f)180°$, où un cycle de phase est formé par un nombre $N_{bc}$ de bobinages voisins dans un cycle qui sont connectés entre eux électriquement en série, et où $N_{dcf}$ est le nombre de dents par cycle de phase ; et
la phase associée auxdits premiers bobinages de cycles de phases successives et le sens d'enroulement desdits premiers bobinages de cycles de phases successives sont déterminés par des phaseurs séparés les uns des autres d'un angle égal audit angle électrique $\alpha_{cf}$ de la séquence de phaseurs du nombre de phases de ladite machine, **caractérisée en ce que** ladite pluralité de bobinages concentrés enroulés autour desdites dents comprend deux bobinages pour chaque dent et un déplacement de couche $N_{sp}$ qui est le plus proche de $N_{dcf}/2$ est choisi.

**2.** Machine électrique synchrone selon la revendication 1, **caractérisée en ce que** la phase desdits premiers bobinages est affectée aux bobinages de chaque cycle.

**3.** Machine électrique synchrone selon la revendication 1, **caractérisée en ce qu'**elle représente un générateur.

**4.** Machine électrique synchrone selon la revendication 1, **caractérisée en ce qu'**elle représente un moteur.

**5.** Machine électrique synchrone selon la revendication 1, **caractérisée en ce que** ladite pluralité de pôles est constituée d'aimants permanents.

**6.** Machine électrique synchrone selon la revendication 1, **caractérisée en ce que** ladite pluralité de pôles est constituée de corps polaires enroulés, montés avec des pièces polaires de forme appropriée.

**7.** Machine électrique synchrone selon la revendication 1, **caractérisée en ce que** les bobinages de ladite pluralité de bobinages concentrés sont dans le même sens.

**8.** Machine électrique synchrone selon la revendication 1, **caractérisée en ce que** les bobinages de ladite pluralité de bobinages concentrés sont dans le sens contraire.

**9.** Machine électrique synchrone selon la revendication 1, **caractérisée en ce que** ladite machine électrique tourne avec un entrefer cylindrique.

**10.** Machine électrique synchrone selon la revendication 1, **caractérisée en ce que** ladite machine électrique tourne avec un entrefer plat, avec une structure à simple inducteur.

**11.** Machine électrique synchrone selon la revendication 1, **caractérisée en ce que** ladite machine électrique tourne avec un entrefer plat, avec une structure à double inducteur et des dents de stator sans culasse ferromagnétique pour fermer les flux.

**12.** Machine électrique synchrone selon la revendication 1, **caractérisée en ce que** ladite machine électrique est linéaire, avec un entrefer cylindrique.

**13.** Machine électrique synchrone selon la revendication 1, **caractérisée en ce que** ladite machine électrique est linéaire, avec un entrefer plat et une structure à simple inducteur.

**14.** Machine électrique synchrone selon la revendication 1, **caractérisée en ce que** ladite machine électrique est linéaire, avec un entrefer plat et une structure bilatérale et des dents de stator qui ne nécessitent pas de culasse ferromagnétique pour fermer les flux.

**15.** Procédure de conception d'une machine électrique synchrone à bobinages concentrés comprenant :

une pluralité de dents (12) positionnées sur le stator ;
une pluralité de bobinages concentrés (13) enroulés autour desdites dents, adaptés pour constituer au moins un cycle ;
une pluralité de pôles d'induction (14) ;

**caractérisée en ce que** :

la valeur absolue $\nu$ de la différence entre le nombre desdits pôles par cycle $N_{pc}$ et le nombre desdites dents par cycle $N_{dc}$ est choisie de façon à être inférieure à deux fois le nombre de phases $N_f$ ;
l'angle électrique $\alpha_{cf}$ entre les premiers bobinages de cycles de phases successives est $\alpha_{cf} = (N_{def} + \nu/N_f)180°$, où un cycle de phase est formé par un nombre $N_{bc}$ de bobinages voisins dans un cycle qui sont connectés entre eux électriquement en série, et où $N_{dcf}$ est le nombre de dents par cycle de phase ; et
la phase associée auxdits premiers bobinages de cycles de phases successives et le sens d'enroulement desdits premiers bobinages de cycles de phases successives sont déterminés par des phaseurs séparés les uns des autres d'un angle égal audit angle électrique $\alpha_{cf}$ de la séquence de phaseurs du nombre de phases de ladite machine.

**16.** Procédure selon la revendication 15, **caractérisée en ce que** la phase desdits premiers bobinages est affectée aux bobinages de chaque cycle.

**17.** Procédure selon la revendication 15, **caractérisée en ce qu'**il représente un générateur.

**18.** Procédure selon la revendication 15, **caractérisée en ce qu'**il représente un moteur.

**19.** Procédure selon la revendication 15, **caractérisée en ce que** ladite pluralité de pôles est constituée d'aimants permanents.

**20.** Procédure selon la revendication 15, **caractérisée en ce que** ladite pluralité de pôles est constituée de corps polaires enroulés, montés avec des pièces polaires de forme appropriée.

**21.** Procédure selon la revendication 15, **caractérisée en ce que** les bobinages de ladite pluralité de bobinages concentrés sont dans le même sens.

**22.** Procédure selon la revendication 15, **caractérisée en ce que** les bobinages de ladite pluralité de bobinages concentrés sont dans le sens contraire.

**23.** Procédure selon la revendication 15, **caractérisée en ce que** ladite pluralité de bobinages concentrés enroulés autour desdites dents comprend deux bobinages pour chaque dent et un déplacement de couche $N_{sp}$ qui est le plus proche de $N_{dcf}/2$ est choisi.

**24.** Procédure selon la revendication 15, **caractérisée en ce que** ladite machine électrique tourne avec un entrefer cylindrique.

**25.** Procédure selon la revendication 15, **caractérisée en ce que** ladite machine électrique tourne avec un entrefer plat, avec une structure à simple inducteur.

**26.** Procédure selon la revendication 15, **caractérisée en ce que** ladite machine électrique tourne avec un entrefer plat, avec une structure à double inducteur et des dents de stator sans culasse ferromagnétique pour fermer les flux.

**27.** Procédure selon la revendication 15, **caractérisée en ce que** ladite machine électrique est linéaire, avec un entrefer cylindrique.

**28.** Procédure selon la revendication 15, **caractérisée en ce que** ladite machine électrique est linéaire, avec un entrefer plat et une structure à simple inducteur.

**29.** Procédure selon la revendication 15, **caractérisée en ce que** ladite machine électrique est linéaire, avec un entrefer plat et une structure bilatérale et des dents de stator qui ne nécessitent pas de culasse ferromagnétique pour fermer les flux.

**30.** Procédé de détermination de l'affectation de la phase et du sens d'enroulement des bobinages d'une machine électrique synchrone à bobinages concentrés, comprenant les étapes consistant à :

déterminer l'angle électrique $\alpha_{cf}$ entre les premiers bobinages de cycles de phases successives qui vaut $\alpha_{cf}$ = $(N_{def} + v/N_f)180°$, où $N_{dcf}$ est le nombre de dents par cycle de phase et $N_f$ est le nombre de phases ;
déterminer des phaseurs séparés les uns des autres d'un angle égal audit angle électrique $\alpha_{cf}$ d'après la séquence de phases du nombre de phases de ladite machine ;
associer auxdits premiers bobinages de cycles de phases successives les noms desdits phaseurs préalablement déterminés ;
associer aux bobinages de chaque cycle de phase la phase desdits premiers bobinages de cycles de phase.

**31.** Procédé de détermination de l'affectation de la phase et du sens d'enroulement des bobinages d'une machine électrique synchrone à bobinages concentrés selon la revendication 30, **caractérisé en ce que** l'étape d'association des bobinages de chaque cycle de phase à la phase desdits premiers bobinages de cycles de phases comprend l'étape d'association d'un sens d'enroulement aux bobinages de sens contraire voisins.

**32.** Procédé de détermination de l'affectation de la phase et du sens d'enroulement des bobinages d'une machine électrique synchrone à bobinages concentrés selon la revendication 30, **caractérisé en ce que** l'étape d'association des bobinages de chaque cycle de phase à la phase desdits premiers bobinages de cycles de phases comprend l'étape d'association d'un sens d'enroulement identique aux bobinages voisins.

Fig.1

Fig.2

Fig.3

Fig.4

Fig.11

Fig.5

Fig.6

Fig.7

EP 1 514 340 B1

**11** **13** **14**

**12**

Fig.8

**12** **11** **13** **14**

**11** **14**

Fig.9

**11** **13** **14** **22**

**11** **14**

Fig.10

Fig.12

Fig.13

Fig.14

Fig.15